Europäisches Patentamt

(19) European Patent Office

Office européen des brevets

(11) Veröffentlichungsnummer : **0 294 563 B1**

(12) **EUROPÄISCHE PATENTSCHRIFT**

(45) Veröffentlichungstag der Patentschrift :
26.06.91 Patentblatt 91/26

(51) Int. Cl.⁵ : **G01B 5/00**

(21) Anmeldenummer : 88105945.5

(22) Anmeldetag : 14.04.88

(54) **Positionmesseinrichtung.**

(30) Priorität : 11.06.87 DE 3719409

(43) Veröffentlichungstag der Anmeldung :
14.12.88 Patentblatt 88/50

(45) Bekanntmachung des Hinweises auf die
Patenterteilung :
26.06.91 Patentblatt 91/26

(84) Benannte Vertragsstaaten :
AT CH DE ES FR GB IT LI NL SE

(56) Entgegenhaltungen :
EP-A- 0 126 888
EP-A- 0 169 189
DE-C- 3 106 701

(73) Patentinhaber : **Dr. Johannes Heidenhain
GmbH**
**Dr.-Johannes-Heidenhain-Strasse 5 Postfach
1260**
**W-8225 Traunreut (DE)**

(72) Erfinder : **Ernst, Alfons, Dipl.-Ing.**
**Traunring 62**
**W-8225 Traunreut (DE)**

## Beschreibung

Die Erfindung betrifft eine Bearbeitungs- oder Meßmaschine mit einer Positionsmeßeinrichtung zur Messung der Relativlage zweier Objekte gemäß dem Oberbegriff des Anspruchs 1.

Derartige Positionsmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Einrichtungen bei Positionsmeßeinrichtungen zur Kompensation von Fehlern, insbesondere von Teilungsfehlern eines Maßstabs, von Maschinenfehlern von Maschinenteilen und/oder von temperaturbedingten Fehlern sind bereits bekannt.

Aus der DE-PS 27 12 421 ist eine gekapselte Längenmeßeinrichtung bekannt, bei der ein Maßstab auf einem Maßstabträger längsverschieblich angeordnet und an beiden Enden mit einem zu messenden Maschinenteil über Befestigungselemente verbunden ist, die ihrerseits unabhängig vom Maßstabträger starr am Maschinenteil befestigt sind. Während das eine Ende des Maßstabs direkt mit dem einen Befestigungselement verbunden ist, ist das andere Ende des Maßstabs zur Korrektur von Teilungsfehlern und/oder von Maschinenfehlern über eine federbelastete Dehneinrichtung mit dem anderen Befestigungselement verbunden. Die Längenmeßeinrichtung der DE-OS 29 11 047 weist neben einer Dehneinrichtung noch eine zusätzliche Staucheinrichtung auf.

Die DE-PS 25 18 745 offenbart eine gekapselte Längenmeßeinrichtung, deren Gehäuse an beiden Enden über je einen Winkel an einem Maschinenteil gelenkig befestigt ist. Ein Maßstab ist im Gehäuse längsverschieblich angeordnet und zur Korrektur von Teilungsfehlern und/oder Maschinenfehlern an beiden Enden jeweils über eine federbelastete Dehneinrichtung oder eine federbelastete Staucheinrichtung mit den Winkeln verbunden.

Aus der DE-PS 31 06 701 ist eine Einrichtung bei einer Längenmeßeinrichtung für Werkzeugmaschinen bekannt, bei der zur Kompensation thermischer Längenänderungen von Maschinenteilen ein Dehnstab aus einem Material mit hohem thermischen Ausdehnungskoeffizienten mit einem Ende an einem Maschinenteil und mit dem anderen Ende an einem Maßstab befestigt ist, wobei die Wärmedehnung des Dehnstabes gleich derjenigen des Maschinenteils ist, so daß die Wärmedehnung des Maschinenteils von der Meßeinrichtung erfaßt wird.

In der DE-OS 28 53 771 ist eine Längemeßeinrichtung beschrieben, deren Gehäuse zur Aufnahme eines Maßstabs und einer Abtasteinheit an beiden Enden über Befestigungselemente mit einem zu messenden Maschinenteil verbunden ist. Während das eine Ende des Gehäuses direkt mit dem ersten Befestigungselement verbunden ist, ist zwischen dem anderen Ende des Gehäuses und dem zweiten Befestigungselement ein Längenausgleichselement zur Temperaturkompensation angeordnet, so daß dieses Ende des Gehäuses mit einem translatorischen Freiheitsgrad in Längsrichtung des Gehäuses gelagert ist.

Der DE-OS 32 43 966 entnimmt man eine Längenmeßeinrichtung, bei der ein Maßstab in seiner Mitte mit einem festen Meßbezugspunkt und ansonsten bei Temperaturänderungen in Meßrichtung geringfügig beweglich auf einem Maßstabträger angeordnet ist. Der Maßstabträger ist einmal an beiden Enden über jeweils ein Längenausgleichselement mit Befestigungselementen verbunden, die starr an einem zu messenden Maschinenteil befestigt sind, und zum anderen in seiner Mitte über ein zusätzliches Befestigungselement starr am Maschinenteil befestigt, so daß der Maßstab bei Temperaturänderungen seinen festen Meßbezugspunkt bezüglich des Maschinenteils beibehält.

Die US-PS 3,816,002, von der die Anmeldung lant Oberbergriff des Anspruchs 1 ansgeht, beschreibt eine Längenmeßeinrichtung, deren Gehäuse zur Aufnahme eines Maßstabs und einer Abtasteinheit mit einem Ende fest und mit dem anderen Ende zur Kompensation thermisch bedingter Längenänderungen längsverschieblich mit einem Maschinenteil verbunden ist. Der Maßstab ist innerhalb des Gehäuses an einem Ende fixiert und mit dem anderen Ende über eine Spannvorrichtung mit dem Gehäuse verbunden. Mit dieser federbelasteten Spannvorrichtung bleibt der Maßstab von den temperaturbedingten Längenänderungen des Gehäuses unbeeinflußt.

Die Kompensation von temperaturbedingten Fehlern ist erforderlich, da in Räumen mit Bearbeitungsmaschinen, an denen derartige Positionsmeßeinrichtungen eingesetzt werden, im allgemeinen keine konstante Temperatur vorherrschen wird ; ebenso ändern sich die Temperaturen der einzelnen Bearbeitungsmaschinen während der Bearbeitungsdauer von Werkstücken ständig. Da aus Kostengründen in den seltensten Fällen das zu messende Maschinenteil, der Maßstab sowie der Maßstabträger aus Materialien mit gleichen thermischen Ausdehnungskoeffizienten $\alpha$ bestehen werden, unterliegen bei diesen unvermeidlichen Temperaturänderungen das Maschinenteil, der Maßstab und der Maßstabträger unterschiedlichen thermischen Längenänderungen, so daß Meßungenauigkeiten bei der Bearbeitung eines Werkstücks auftreten können, die bei den heutigen Anforderungen an die Bearbeitungsgenauigkeit von Werkstücken nicht mehr tragbar sind. Am häufigsten ver-

2

wendet man für das Maschinenteil Grauguß ($\alpha$ (O) = 10 · $10^{-6}$ $K^{-1}$), für den Maßstabträger Aluminium ($\alpha$ (G) = 23 · $10^{-6}$ $K^{-1}$) und für den Maßstab Glas ($\alpha$ (M) = 8 · $10^{-6}$ $K^{-1}$) ; hinzu kommt, daß die am häufigsten bearbeiteten Werkstücke aus Stahl ($\alpha$ (W) = 11 · $10^{-6}$ $K^{-1}$) bestehen.

Aus der DE-OS 34 19 527 ist eine Positionsmeßeinrichtung an einer Bearbeitungsmaschine bekannt geworden, bei der ein biegesteifer Maßstab aus Glas in einem Gehäuse als Maßstabträger in Meßrichtung verschieblich angeordnet ist. Das Gehäuse ist am einen Ende direkt mit einem ersten Befestigungselement und am anderen Ende über zwei Kalibrierschrauben mit einem zweiten Befestigungselement verbunden. Der Maßstab weist eine größere Teilungslänge als die erforderliche Sollteilungslänge auf und wird an seinen Enden von den beiden Befestigungselementen beaufschlagt. Mittels der beiden Kalibrierschrauben wird der Maßstab auf die erforderliche Sollteilungslänge bei einer Normaltemperatur (20°C) durch Stauchung mittels der beiden Befestigungselemente eingestellt. Da das zu messende Maschinenteil im allgemeinen bei der Montage der Positionsmeßeinrichtung nicht diese Normaltemperatur aufweisen wird, sind die beiden Kalibrierschrauben mit einer Temperaturskala versehen, die das Einstellen der Teilungslänge des Maßstabs auf die Temperatur des Maschinenteils erlaubt. Nach der starren Befestigung der beiden Befestigungselemente am Maschinenteil werden die beiden Kalibrierschrauben gelöst. Aufgrund seiner Stauchung erfahren der Maßstab und das Maschinenteil bei Temperaturänderungen die gleichen thermischen Längenänderungen. Diese Positionsmeßeinrichtung ist relativ aufwendig aufgebaut und kann thermisch bedingte Bearbeitungsungenauigkeiten nicht beheben, wenn das Maschinenteil und das zu bearbeitende Werkstück nicht aus Materialien mit gleichen thermischen Ausdehnungskoeffizienten $\alpha$ bestehen.

Der Erfindung liegt die Aufgabe zugrunde, eine Bearbeitungs- oder Meßmaschine mit einer Positionsmeßeinrichtung der genannten Gattung anzugeben, bei der die Positionsmeßeinrichtung ohne Berücksichtigung der Temperaturverhältnisse am Maschinenteil montiert werden kann und bei unterschiedlichen Wärmeausdehnungskoeffizienten des Maßstabs und des Werkstücks thermisch bedingte Bearbeitungsungenauigkeiten am zu bearbeitenden Werkstück ausschließt.

Diese Aufgabe wird erfindungsgemäß durch die Merkmale des Anspruchs 1 gelöst.

Die mit der Erfindung erzielten Vorteile bestehen insbesondere darin, daß die vorgeschlagene Positionsmeßeinrichtung bei einer beliebigen Temperatur am Maschinenteil befestigt werden kann. Unabhängig vom thermischen Ausdehnungskoeffizienten des Maschinenteils kann der Temperaturgang des Maßstabs auf den Temperaturgang des zu bearbeitenden Werkstücks eingestellt werden, so daß der Maßstab und das zu bearbeitende Werkstück trotz unterschiedlicher thermischer Ausdehnungskoeffizienten bei Temperaturänderungen die gleichen relativen Längenänderungen erfahren. Die vorgeschlagene Positionsmeßeinrichtung schließt somit thermisch bedingte Bearbeitungsungenauigkeiten praktisch aus, so daß die Ausschußrate erheblich vermindert werden kann.

Vorteilhafte Ausbildungen der Erfindung entnimmt man den abhängigen Ansprüchen.

Ausführungsbeispiele der Erfindung werden anhand der Zeichnung näher erläutet.

Es zeigen

Figur 1 eine erste gekapselte Längenmeßeinrichtung in einer Längsansicht ;

Figur 2 eine zweite gekapselte Längenmeßeinrichtung in einer Längsansicht ;

Figur 3 eine dritte gekapselte Längenmeßeinrichtung in einer Längsansicht und

Figur 4 eine vierte gekapselte Längenmeßeinrichtung in einer Längsansicht.

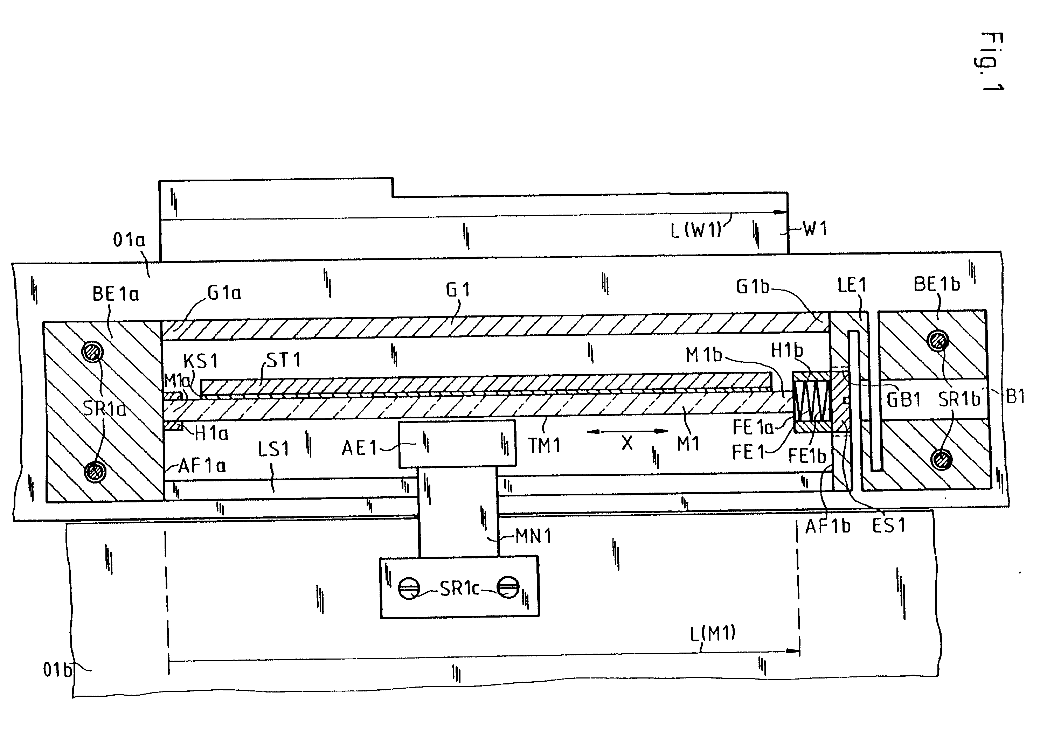

In Figur 1 ist eine erste gekapselte Längenmeßeinrichtung in einer Längsansicht dargestellt. Ein biegesteifer Maßstab M1, beispielsweise aus Glas, ist auf einem Innensteg ST1 eines Maßstabträgers G1 in Form eines Gehäuses, beispielsweise aus Aluminium, mittels einer Klebeschicht KS1 in Meßrichtung X geringfügig verschiebbar angeordnet. Der Maßstabträger G1 ist am ersten Ende G1a direkt mit einem ersten Befestigungselement BE1a und am zweiten Ende G1b mit einem translatorischen Freiheitsgrad in Meßrichtung X über ein Längenausgleichselement LE1 mit einem zweiten Befestigungselement BE1b verbunden ; die beiden Befestigungselemente BE1a, BE1b sind ihrerseits mittels Schrauben SR1a, SR1b starr an einem ersten Objekt O1a befestigt.

Die Teilung TM1 des Maßstabs M1 wird in bekannter Weise von einer Abtasteinheit AE1 im Gehäuse G1 abgetastet, die über einen Mitnehmer MN1 mittels Schrauben SR1c mit einem zweiten Objekt O1b verbunden ist ; der Mitnehmer MN1 greift durch einen von nicht gezeigten Dichtlippen verschlossenen Längsschlitz LS1 des Gehäuses G1 hindurch. Es können das erste Objekt O1a aus einem Schlitten, beispielsweise aus Stahl, und das zweite Objekt O1b aus dem Bett, beispielsweise aus Grauguß, einer nicht gezeigten Bearbeitungsmaschine bestehen ; die Längenmeßeinrichtung dient zur Messung der gegenseitigen Relativlage der beiden Objekte O1a, O1b bzw. der gegenseitigen Relativlage eines auf dem Schlitten O1a aufgespannten Werkstücks W1 und eines nicht gezeigten Werkzeugs am Bett O1b der Werkzeugmaschine.

Im zweiten Befestigungselement BE1b wird das Längenausgleichselement LE1 in integrierter Form durch einen mäanderförmigen Bereich mit zwei gegenläufigen Schlitzen senkrecht zur Meßrichtung X gebildet, der sich zwischen den Schrauben SR1b und dem zweiten Ende G1b des Maßstabträgers G1 in Form des Gehäuses für den Maßstab M1 und die Abtasteinheit AE1 befindet. Die beiden Befestigungselemente BE1a, BE1b bilden gleichzeitig die stirnseitigen Abschlußflächen AF1a, AF1b der beiden Enden G1a, G1b des Gehäuses G1, die mit diesen beiden Enden G1a, G1b des Gehäuses G1 in nicht gezeigter Weise fest verbunden sind.

Die inkrementale Teilung TM1 des Maßstabs M1 besteht in bekannter Weise aus einem Strichgitter mit einer Gitterkonstanten P (Teilungsperiode), die bei der Normaltemperatur T0 (20°C) exakt ist. Würde die Bearbeitung des Werkstücks W1, beispielsweise aus Stahl, ausschließlich bei dieser Normaltemperatur T0 erfolgen, so würden trotz der unterschiedlichen Wärmeausdehnungskoeffizienten $\alpha(M1)$, $\alpha(W1)$ des Maßstabs M1 aus Glas und des Werkstücks W1 aus Stahl keine Meßungenauigkeiten während der Bearbeitung und damit keine thermisch bedingten Bearbeitungsungenauigkeiten am Werkstück W1 auftreten.

Im allgemeinen ändern sich jedoch während der Bearbeitungsdauer eines Werkstücks W1 die Temperaturen an der Werkzeugmaschine ständig gegenüber der Normaltemperatur T0, so daß bei einer Temperaturerhöhung $\Delta T$ gegenüber der Normaltemperatur T0 das Werkstück W1 der Länge L(W1) bei der Normaltemperatur T0 eine relative Längenänderung $\Delta L(W1)/L(W1)$ und der Maßstab M1 der gleichen Länge L(M1) bei der Normaltemperatur T0 eine relative Längenänderung $\Delta L(M1)/L(M1)$ erfahren werden. Wegen des größeren Wärmeausdehnungskoeffizienten $\alpha(W1) = 11 \cdot 10^{-6} K^{-1}$ des Werkstücks W1 aus Stahl gegenüber dem Wärmeausdehnungskoeffizienten $\alpha(M1) = 8 \cdot 10^{-6} K^{-1}$ des Maßstabs M1 aus Glas ist auch die relative Längenänderung $\Delta L(W1)/L(W1)$ des Werkstücks W1 größer als die relative Längenänderung $\Delta L(M1)/L(M1)$ des Maßstabs M1 bei der Temperaturerhöhung $\Delta T$, so daß Meßungenauigkeiten und damit thermisch bedingte Bearbeitungsungenauigkeiten am Werkstück W1 auftreten können, die bei den heutigen Genauigkeitsanforderungen nicht mehr tragbar sind.

Es wird daher vorgeschlagen, die exakte Solllänge L(M1) des Maßstabs M1 bei der Normaltemperatur T0 bei der Herstellung um eine relative Verlängerung $V1 = \Delta L(M1)/L(M1)$ zu vergrößern, so daß der Maßstab M1 nunmehr bei der Normaltemperatur T0 die vergrößerte Länge $L'(M1) = L(M1) + V1 \cdot L(M1)$ aufweist. Diese relative Verlängerung V1 des Maßstabs M1 wird durch eine entsprechende Vergrößerung der exakten Gitterkonstanten P der inkrementalen Teilung TM1 erzielt, so daß der ursprüngliche inkrementale Maßstab M1 bei der exakten Solllänge L(M1) eine bestimmte Anzahl von Inkrementen (Teilungsstrichen) mit der exakten Gitterkonstanten P und der verlängerte inkrementale Maßstab M1 bei der vergrößerten Länge L'(M1) die gleiche Anzahl von Inkrementen (Teilungsstrichen) mit der vergrößerten Gitterkonstanten P' aufweist.

Der Maßstab M1 möge beispielsweise bei der Normaltemperatur T0 nun eine relative Verlängerung $V1 = 30 \mu m/m$ aufweisen. Mit einem Wärmeausdehnungskoeffizienten $\alpha(M1) = 8 \cdot 10^{-6} K^{-1}$ des Maßstabs M1 aus Glas und mit einem Wärmeausdehnungskoeffizienten $\alpha(W1) = 11 \cdot 10^{-6} K^{-1}$ des Werkstücks W1 aus Stahl besitzt bei einer Temperaturerhöhung $\Delta T = \dfrac{V1}{\alpha(W1) - \alpha(M1)} = 10°C$, also bei einer Temperatur $TG = T0 + \Delta T = 20°C + 10°C = 30°C$, der verlängerte Maßstab M1 aus Glas die gleiche Länge wie ein unverlängerter Maßstab aus Stahl oder wie das Werkstück W1 aus Stahl. Bei dieser Temperatur TG = 30°C ist dagegen der Maßstabträger G1 aus Aluminium mit dem Wärmeausdehnungskoeffizienten $\alpha(G1 = 23 \cdot 10^{-6} K^{-1}$ und der gleichen Länge L(G1) bei der Normaltempertur T0 um den Betrag $\Delta T \cdot [\alpha(G1) - \alpha(W1)]$. L(M1) länger als die Solllänge L(M1) des Maßstabs M1 aus Glas. Die Temperaturen während der Bearbeitung des Werkstücks W1 mögen dabei beispielsweise zwischen der Normaltemperatur T0 = 20°C als unterer Grenztemperatur und der Temperatur TG = 30°C als oberer Grenztemperatur liegen.

Der Maßstab M1 liegt mit seiner ersten Stirnfläche am ersten Ende M1a an der ersten stirnseitigen Abschlußfläche AF1a des ersten Endes G1a des Gehäuses G1 an und wird von einer das erste Ende M1a des Maßstabs M1 umgreifenden ersten Halterung H1a an der ersten Abschlußfläche AF1a gegen ein seitliches Verschieben gesichert. Die zweite Stirnfläche am zweiten Ende M1b des Maßstabs M1 wird von einem ersten Ende FE1a eines mit dem zweiten Ende G1b des Maßstabträgers G1 verbundenen Federelements FE1 in Form einer Schraubenfeder beaufschlagt. Dieses Federelement FE1 stützt sich mit seinem zweiten Ende FE1b an einer Einstellschraube ES1 ab, die in einer Gewindebohrung GB1 in der zweiten Abschlußfläche AF1b des zweiten Endes G1b des Maßstabträgers G1 angeordnet ist, und wird von einer an der Einstellschraube ES1 befestigten zweiten Halterung H1b umgriffen und gegen ein seitliches Verschieben gesichert ; das zweite Ende FE1b des Federelements FE1 ist somit dem zweiten Ende G1b des Maßstabträgers G1 verbunden, das einen translatorischen Freiheitsgrad in Meßrichtung X aufweist.

Die Federkonstante C1 dieses Federelements FE1 ist so bemessen, daß das Federelement FE1 auf die zweite Stirnfläche des zweiten Endes M1b des Maßstabs M1 mit einer Federkraft F1 drückt, die bei der oberen Grenztemperatur TG den Wert Null und bei der Normaltemperatur T0 = 20°C einen Wert zur Stauchung des verlängerten Maßstabes M1 der Länge L'(M1) um die relative Verlängerung V1 besitzt, so daß der gestauchte Maßstab M1 bei der Normaltemperatur T0 wieder die exakte Solllänge L(M1) aufweist.

Die Federkonstante C1 des Federelements FE1 errechnet sich aus :

$$F1 = [\alpha(G1) - \alpha(W1)] \cdot \Delta T \cdot L(M1) \cdot C1.$$

Mit

$$V1 = \frac{\Delta L(M1)}{L(M1)} = \frac{\sigma(M1)}{E(M1)} = \frac{F1}{Q(M1) \cdot E(M1)}$$

ergibt sich :

$$F1 = V1 \cdot Q(M1) \cdot E(M1).$$

$\sigma(M1)$ = Normalspannung des Maßstabs M1 im Hookeschen Bereich

$E(M1)$ = Elastizitätsmodul des Maßstabs M1

$Q(M1)$ = Querschnitt des Maßstabs M1.

Durch Gleichsetzen

$$V1 \cdot Q(M1) \cdot E(M1) = [\alpha(G1) - \alpha(W1)] \cdot \Delta T \cdot L(M1) \cdot C1$$

und mit

$$V1 = [\alpha(W1) - \alpha(M1)] \cdot \Delta T$$

erhält man :

$$C1 = \frac{\alpha(W1) - \alpha(M1)}{\alpha(G1) - \alpha(W1)} \cdot \frac{Q(M1) \cdot E(M1)}{L(M1)}$$

Als Zahlenbeispiel mit den Werten

$\alpha(M1)$ = $8 \cdot 10^{-6}$ K$^{-1}$
$\alpha(W1)$ = $11 \cdot 10^{-6}$ K$^{-1}$
$\alpha(G1)$ = $23 \cdot 10^{-6}$ K$^{-1}$
$Q(M1)$ = $3 \cdot 20 = 60$ mm$^2$
$E(M1)$ = $80 \cdot 10^3$ N/mm$^2$
$L(M1)$ = 3000 mm

erhält man :

$C1$ = 400 N/mm.

Der Maßstab M1 besitzt an seinem ersten Ende M1a an der Stelle der Anlage seiner ersten Stirnfläche an der ersten Abschlußfläche AF1a des ersten Endes G1a des Maßstabträgers G1 einen festen Meßbezugspunkt bezüglich des ersten Objekts O1a. Die Einstellschraube ES1 dient zur Grundjustierung der exakten Solllänge L(M1) des gestauchten Maßstabs M1 bei der Normaltemperatur T0 und ist durch eine Bohrung B1 im zweiten Befestigungselement BE1b zugänglich.

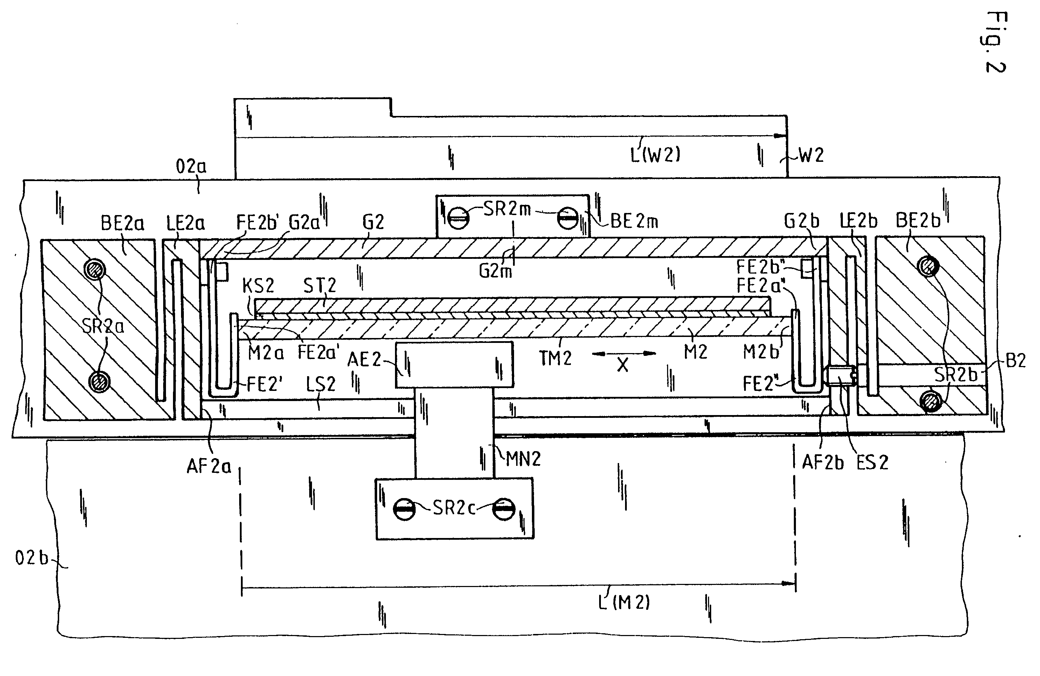

In Figur 2 ist eine zweite gekapselte Längenmeßeinrichtung in einer Längsansicht dargestellt. Ein biegesteifer Maßstab M2, beispielsweise aus Glas, ist auf einem Innensteg ST2 eines Maßstabträgers G2 in Form eines Gehäuses, beispielsweise aus Aluminium, mittels einer Klebeschicht KS2 in Meßrichtung X geringfügig verschiebbar angeordnet. Der Maßstabträger G2 ist in seiner Mitte G2m direkt mit einem mittleren Befestigungselement BE2m, an seinem ersten Ende G2a mit einem translatorischen Freiheitsgrad in Meßrichtung X über ein erstes Längenausgleichselement LE2a mit einem ersten Befestigungselement BE2a und an seinem zweiten Ende G2b mit einem translatorischen Freiheitsgrad in Meßrichtung X über ein zweites Längenausgleichselement LE2b mit einem zweiten Befestigungselement BE2b verbunden ; das mittlere Befestigungselement BE2m, das erste Befestigungselement BE2a und das zweite Befestigungselement BE2b sind ihrerseits mittels Schrauben SR2m, SR2a, SR2b starr an einem ersten Objekt O2a befestigt.

Die Teilung TM2 des Maßstabs M2 wird in bekannter Weise von einer Abtasteinheit AE2 im Gehäuse G2 abgetastet, die über einem Mitnehmer MN2 mittels Schrauben SR2c mit einem zweiten Objekt O2b verbunden ist ; der Mitnehmer MN2 greift durch einen von nicht gezeigten Dichtlippen verschlossenen Längsschlitz LS2 des Gehäuses G2 hindurch. Es können das erste Objekt O2a aus einem Schlitten, beispielsweise aus Stahl, und das zweite Objekt O2b aus einem Bett, beispielsweise aus Grauguß, einer nicht gezeigten Bearbeitungsmaschine bestehen ; die Längenmeßeinrichtung dient zur Messung der gegenseitigen Relativlage der beiden Objekte O2a, O2b bzw. der gegenseitigen Relativlage eines auf dem Schlitten O2a aufgespannten Werkstücks W2 und eines nicht gezeigten Werkzeugs am Bett O2b der Werkzeugmaschine.

In den beiden Befestigungselementen BE2a, BE2b werden die beiden Längenausgleichselemente LE2a, LE2b in integrierter Form jeweils durch einen mäanderförmigen Bereich mit zwei gegenläufigen Schlitzen senkrecht zur Meßrichtung X gebildet, der sich zwischen den Schrauben SR2a, SR2b und den beiden Enden G2a, G2b des Maßstabträgers G2 in Form des Gehäuses für den Maßstab M2 und die Abtasteinheit AE2 befindet. Das erste Befestigungselement BE2a und das zweite Befestigungselement BE2b bilden gleichzeitig die stirnseitigen Abschlußflächen AF2a, AF2b der beiden Enden G2a, G2b des Gehäuses G2, die mit diesen beiden Enden G2a, G2b des Gehäuses G2 in nicht gezeigter Weise fest verbunden sind.

Es wird wiederum die exakte Solllänge L(M2) des Maßstabs M2 bei der Normaltemperatur T0 bei der Herstellung um eine relative Verlängerung $V2 = \Delta L(M2)/L(M2)$ vergrößert, so daß der Maßstab M2 nunmehr bei der Normaltemperatur T0 die vergrößerte Länge $L'(M2) = L(M2) + V2 \cdot L(M2)$ aufweist. Die erste Stirnfläche am ersten Ende M2a des Maßstabs M2 wird von einem ersten Ende FE2a' eines mit dem ersten Ende G2a des Maßstabträgers G2 verbundenen ersten Federelements FE2' in Form einer U-förmigen Blattfeder beaufschlagt. Dieses erste Federelement FE2' ist mit seinem zweiten Ende FE2b' an der ersten Abschlußfläche AF2a des ersten Endes G2a des Maßstabträgers G2 befestigt. Die zweite Stirnfläche am zweiten Ende M2b des Maßstabs M2 wird von einem ersten Ende FE2a'' eines mit dem zweiten Ende G2b des Maßstabträgers G2 verbundenen zweiten Federelements FE2'' in Form einer U-förmigen Blattfeder beaufschlagt. Dieses zweite Federelement FE2'' ist mit seinem zweiten Ende FE2b'' und der zweiten Abschlußfläche AF2b des zweiten Endes G2b des Maßstabträgers G2 befestigt. Die beiden Federelemente FE2', FE2'' sind somit mit den beiden Enden G2a, G2b des Maßstabträgers G2 verbunden, die jeweils einen translatorischen Freiheitsgrad in Meßrichtung X aufweisen.

Die Federkonstante C2 der beiden gleichartigen Federelemente FE2', FE2'' ist so bemessen, daß die Federelemente FE2', FE2'' jeweils auf die beiden Stirnflächen an den beiden Enden M2a, M2b des Maßstabs M2 mit einer Federkraft F2 drücken, die bei der oberen Grenztemperatur TG den Wert Null und bei der Normaltempertur $T0 = 20°C$ einen Wert zur Stauchung des verlängerten Maßstabes M2 der Länge L'(M2) um die relative Verlängerung V2 besitzen, so daß der gestauchte Maßstab M2 bei der Normaltemperatur T0 wieder die exakte Solllänge L(M2) aufweist.

Da der Maßstab M2 mittels der gleichmäßig dicken Klebeschicht KS2 mit dem Maßstabträger G2 verbunden ist, wird er sich in unbelastetem Zustand bei Temperaturerhöhungen symmetrisch zu seiner Mitte nach beiden Seiten hin ausdehnen, da die elastische Klebeschicht KS2 eine geringfügige Verschiebung des Maßstabes M2 in Meßrichtung X zuläßt. Der Maßstab M2 besitzt somit in seiner Mitte einen festen Meßbezugspunkt bezüglich des Maßstabträgers G2 und wegen der starren Befestigung des Maßstabträgers G2 in seiner Mitte mittels des mittleren Befestigungselements BE2m am ersten Objekt O2a den gleichen festen Meßbezugspunkt bezüglich des ersten Objekts O2a.

Nach der obigen Herleitung ergibt sich für die Federkonstante C2 :

$$C2 = \frac{\alpha(W2) - \alpha(M2)}{\alpha(G2) - \alpha(W2)} \cdot \frac{Q(M2) \cdot E(M2) \cdot 2}{L(M2)}$$

und mit den gleichen obigen Zahlenwerten :
C2 = 800 N/mm.

In der Gleichung für die Federkonstante C2 wurde L(M2) durch L(M2)/2 ersetzt, da jedes Federelement FE2', FE2'' jeweils der halben Solllänge des Maßstabes M2 zugeordnet ist.

Das zweite Federelement FE2'' wird von einer Einstellschraube ES2 beaufschlagt, die in einer Gewindebohrung GB2 des zweiten Befestigungselements BE2b angeordnet und durch eine Bohrung B2 zugänglich ist; die Einstellschraube ES2 dient zur Grundjustierung der exakten Solllänge L(M2) des gestauchten Maßstabs M2 bei der Normaltemperatur T0.

Nach Figur 1 hängen die Federkonstante C1 des Federelements FE1 von der ganzen Sollänge L(M1) des Maßstabs M1 und nach Figur 2 die Federkonstante C2 der beiden Federelemente FE2′, FE2″ jeweils von der halben Sollänge L(M2)/2 des Maßstabs M2 ab : C1 ~1/L(M1), C2 ~2/L(M2). Bei Bearbeitungsmaschinen werden aber Längenmeßeinrichtungen eingesetzt, deren Maßstäbe M unterschiedliche Sollängen L(M) je nach den vorliegenden Einsatzzwecken aufweisen, so daß eine Vielzahl von Federelementen FE mit unterschiedlichen Federkonstanten C erforderlich ist.

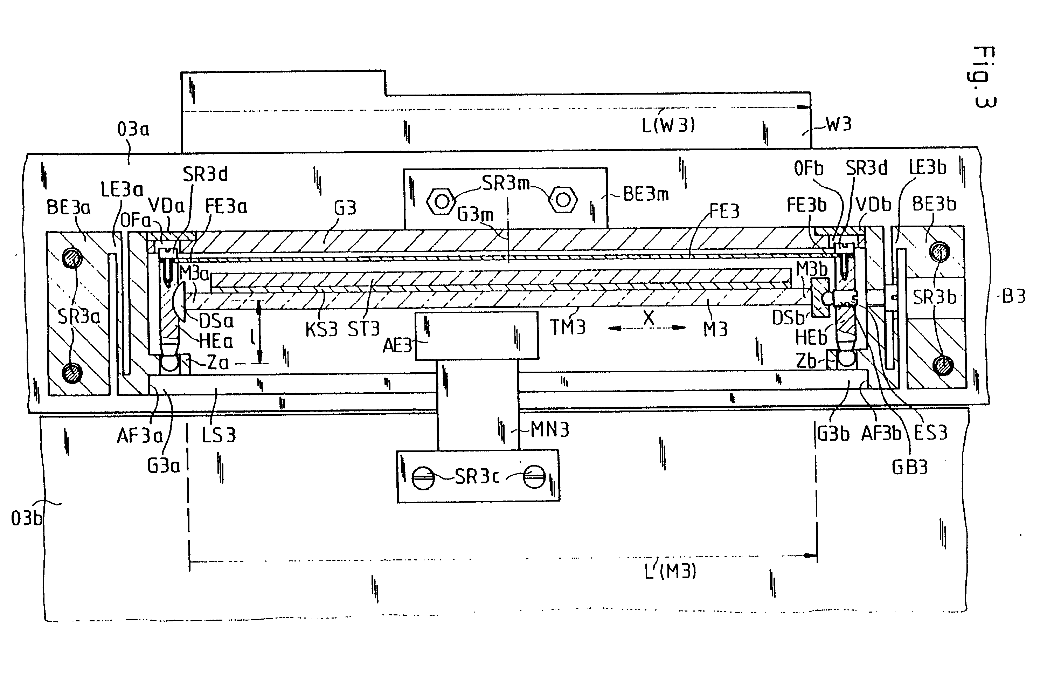

In Figur 3 ist daher eine dritte gekapselte Längenmeßeinrichtung in einer Längsansicht dargestellt. Ein biegesteifer Maßstab M3, beispielsweise aus Glas, ist auf einem Innensteg ST3 eines Maßstabträgers G3 in Form eines Gehäuses, beispielsweise aus Aluminium, mittels einer Klebeschicht KS3 in Meßrichtung X geringfügig verschiebbar angeordnet. Der Maßstabträger G3 ist in seiner Mitte G3m direkt mit einem mittleren Befestigungselement BE3m, an seinem ersten Ende G3a mit einem translatorischen Freiheitsgrad in Meßrichtung X über ein erstes Längenausgleichselement LE3a mit einem ersten Befestigungselement BE3a und an seinem zweiten Ende G3b mit einem translatorischen Freiheitsgrad in Meßrichtung X über ein zweites Längenausgleichselement LE3b mit einem zweiten Befestigungselement BE3b verbunden ; das mittlere Befestigungselement BE3m, das erste Befestigungselement BE3a und das zweite Befestigungselement BE3b sind ihrerseits mittels Schrauben SR3m, SR3a, SR3b starr an einem ersten Objekt O3a befestigt.

Die Teilung TM3 des Maßstabs M3 wird in bekannter Weise von eine Abtasteinheit AE3 im Gehäuse G3 abgetastet, die über einen Mitnehmer MN3 mittels Schrauben SR3c mit einem zweiten Objekt O3b verbunden ist ; der Mitnehmer MN3 greift durch einen von nicht gezeigten Dichtlippen verschlossenen Längsschlitz LS3 des Gehäuses G3 hindurch. Es können das erste Objekt O3a aus einem Schlitten, beispielsweise aus Stahl, und das zweite Objekt O3b aus dem Bett, beispielsweise aus Grauguß, einer nicht gezeigten Bearbeitungsmaschine bestehen ; die Längenmeßeinrichtung dient zur Messung der gegenseitigen Relativlage der beiden Objekte O3a, O3b bzw. der gegenseitigen Relativlage eines auf dem Schlitten O3a aufgespannten Werkstücks W3 und eines nicht gezeigten Werkzeugs am Bett O3b der Werkzeugmaschine.

In den beiden Befestigungselementen BE3a, BE3b werden die beiden Längenausgleichselemente LE3a, LE3b in integrierter Form jeweils durch einen mäanderförmigen Bereich mit zwei gegenläufigen Schlitzen senkrecht zur Meßrichtung X gebildet, der sich zwischen den Schrauben SR3a, SR3b und den beiden Enden G3a, G3b des Maßstabträgers G3 in Form des Gehäuses für den Maßstab M3 und die Abtasteinheit AE3 befindet. Das erste Befestigungselement BE3a und das zweite Befestigungselement BE3b bilden gleichzeitig die stirnseitigen Abschlußflächen AF3a, AF3b der beiden Enden G3a, G3b des Gehäuses G3, die mit diesen beiden Enden G3a, G3b des Gehäuses G3 in nicht gezeigter Weise fest verbunden sind.

Es wird wiederum die exakte Sollänge L(M3) des Maßstabs M3 bei der Normaltemperatur T0 bei der Herstellung um eine relative Verlängerung V3 = $\Delta$ L(M3)/L(M3) vergrößert, so daß der Maßstab M3 nunmehr bei der Normaltemperatur T0 die vergrößerte Länge L′(M3) = L(M3) + V3 · L(M3) aufweist. Im Gehäuse G3 sind an seinen ersten Ende G3a ein erstes biegesteifes Hebelelement HEa und an seinem zweiten Ende G3b ein zweites biegesteifes Hebelelement HEb senkrecht zur Meßrichtung X angeordnet. Das erste Hebelelement HEa ist mit einem Ende in einem aus der ersten Abschlußfläche AF3a herausragenden ersten Zapfen Za drehbar gelagert ; desgleichen ist das zweite Hebelelement HEb mit einem Ende in einem aus der zweiten Abschlußfläche AF3b herausragenden zweiten Zapfen Zb drehbar gelagert. An den beiden freien Enden der beiden Hebelelemente HEa, Heb sind die beiden Enden FE3a, FE3b eines Federelements FE3 mittels Schrauben SR3d befestigt, die durch zwei Öffnungen OFa, OFb in den beiden Enden G3a, G3b des Gehäuses G3 zugänglich sind, die durch zwei Verschlußdeckel VDa, VDb verschlossen sind. Im ersten Hebelelement HEa ist zwischen seinen beiden Enden ein erstes Druckstück DSa gelenkig angeordnet, das die erste Stirnfläche am ersten Ende M3a des Maßstabs M3 beaufschlagt. Die zweite Stirnfläche am zweiten Ende M3b des Maßstabs M3 wird von einem zweiten Druckstück DSb beaufschlagt, das gelenkig an einer Einstellschraube ES3 befestigt ist, die in einer Gewindebohrung GB3 des zweiten Hebelelements HEb zwischen seinen beiden Enden angeordnet ist und durch eine Bohrung B3 im zweiten Befestigungselement BE3b zugänglich ist. Die beiden Enden FE3a, FE3b des Federelements FE3 sind somit über die beiden Hebelelemente HEa, HEb mit den beiden Enden G3a, G3b des Maßstabträgers G3 verbunden, die jeweils einen translatorischen Freiheitsgrad in Meßrichtung X aufweisen.

Das Federelement FE3 ist als Zugfeder in Form eines Metallbandes oder eines Metallprofils ausgebildet; die Länge des Federelements FE3 entspricht etwa der Sollänge L(M3) des Maßstabs M3 und die Federkonstante C3 des Federelements FE3 hängt in gleicher Weise von der Sollänge L(M3) des Maßstabs M3 ab : C3 ~1/L(M3). Die Federkonstante C3 des Federelementes FE3 ist so bemessen, daß das Federelement FE3 über die beiden Hebelelemente HEa, HEb und die beiden Druckstücke DSa, DSb jeweils auf die beiden Stirnflächen an den beiden Enden M3a, M3b des Maßstabs M3 mit einer Federkraft F3 drückt, die bei der oberen Grenztemperatur TG den Wert Null und bei der Normaltemperatur T0 = 20°C einen Wert zur Stauchung des

7

verlängerten Maßstabs M3 der Länge L'(M3) um die relative Verlängerung V3 besitzen, so daß der gestauchte Maßstab M3 bei der Normaltemperatur T0 wieder die exakte Sollänge L(M3) aufweist.

Da der Maßstab M3 mittels der gleichmäßig dicken Klebeschicht KS3 mit dem Maßstabträger G3 verbunden ist, wird er sich in unbelastetem Zustand bei Temperaturerhöhungen symmetrisch zu seiner Mitte nach beiden Seiten hin ausdehnen, da die elastische Klebeschicht KS3 eine geringfügige Verschiebung des Maßstabes M3 in Meßrichtung X zuläßt. Der Maßstab M3 besitzt somit in seiner Mitte einen festen Meßbezugspunkt bezüglich des Maßstabträgers G3 und wegen der starren Befestigung des Maßstabträgers G3 in seiner Mitte mittels des mitteleren Befestigungselements BE3m am ersten Objekt O3a den gleichen festen Meßbezugspunkt bezüglich des ersten Objekts O3a. Die Einstellschraube ES3 dient zur Grundjustierung der exakten Sollänge L(M3) des gestauchten Maßstabs M3 bei der Normaltemperatur T0.

Nach der obigen Herleitung ergibt sich für die Federkonstante C3 :

$$C3 = \frac{\alpha(W3) - \alpha(M3)}{\alpha(G3) - \alpha(W3)} \cdot \frac{Q(M3) \cdot E(M3) \cdot 2}{L(M3)}$$

und mit den gleichen obigen Zahlenwerten :
C3 = 800 N/mm.

Der erste Hebelarm der beiden Hebelelemente HEa, HEb zwischen den Drehpunkten in den Enden G3a, G3b des Maßstabträgers G3 und den Angriffspunkten am Maßstab M3 besitzt die erste Hebelarmlänge 1 und der zweite Hebelarm der beiden Hebelelemente HEa, HEb zwischen den Angriffspunkten am Maßstab M3 und den Angriffspunkten des Federelements FE3 weist die zweite Hebelarmlänge i · 1 auf, wobei i die Hebelübersetzung bedeutet.

Die Hebelübersetzung i der beiden Hebelelemente HEa, HEb, der Elastizitätsmodul E(FE3) des Federelements FE3, der Elastizitätsmodul E(M3) des Maßstabs M3, der Elastizitätsmodul E(G3) des Maßstabträgers G3, der Querschnitt Q(FE3) des Federelements FE3, der Querschnitt Q(M3) des Maßstabs M3 und der Querschnitt Q(G3) des Maßstabträgers G3 sind so abzustimmen, daß der Wärmeausdehnungskoeffizient α (M3) des Maßstabs M3 aus Glas um einen bestimmten Betrag Δα (M3) auf den Wärmeausdehnungskoeffizienten α (W3) des Werkstücks (W3) aus Stahl angehoben wird :

$$\alpha(M3) + \Delta\alpha(M3) = \alpha(W3).$$

Der Anhebungsbetrag Δα (M3) des Wärmeausdehnungskoeffizienten α (M3) des Maßstabs M3 ergibt sich zu :

$$\Delta\alpha(M3) = \frac{\frac{\alpha(FE3)}{i} + \frac{i-1}{i}\alpha(G3) - \alpha(M3)}{1 + \frac{1}{i^2} \cdot \frac{Q(M3) \cdot E(M3)}{Q(FE3) \cdot E(FE3)} + \left(\frac{i-1}{i}\right)^2 \frac{Q(M3)}{Q(G3)} \frac{E(M3)}{E(G3)}}$$

Da der Maßstabträger G3 im allgemeinen sehr viel steifer als der Maßstab M3 ausgebildet ist, vereinfacht sich diese Gleichung :

$$\Delta\alpha(M3) = \frac{\frac{\alpha(FE3)}{i} + \frac{i-1}{i}\alpha(G3) - \alpha(M3)}{1 + \frac{1}{i^2} \frac{Q(M3)}{Q(FE3)} \frac{E(M3)}{E(FE3)}}$$

Als Zahlenbeispiel mit den Werten

| | |
|---|---|
| α (FE3) | = 11 · 10⁻⁶ K⁻¹ |
| α (M3) | = 8 · 10⁻⁶ K⁻¹ |
| α (G3) | = 23 · 10⁻⁶ K⁻¹ |
| Q(M3)/Q(FE3) | = 6 |
| E(FE3)/E(M3) | = 3 |
| i | = 1,5 |

erhält man :

$$\Delta\alpha\,(M3) = 3{,}4 \cdot 10^{-6}\,K^{-1}$$

$$\alpha\,(M3) + \Delta\alpha\,(M3) = 11{,}4 \cdot 10^{-6}\,K^{-1} \;\hat{=}\; \alpha\,(W3) = 11 \cdot 10^{-6} \cdot K^{-1}$$

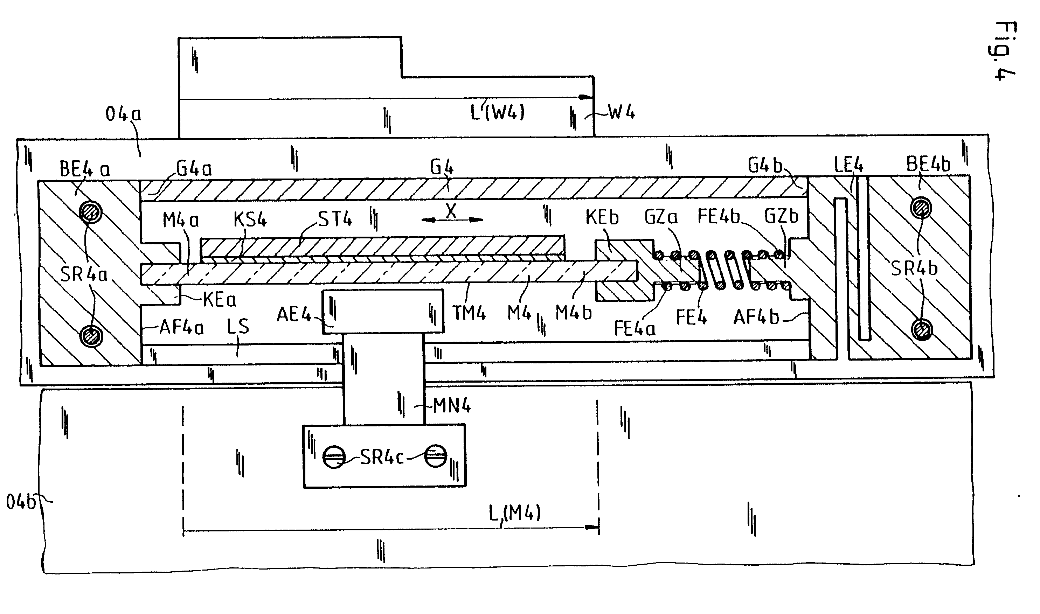

In Figur 4 ist eine vierte gekapselte Längenmeßeinrichtung in einer Längsansicht dargestellt. Ein biegesteifer Maßstab M4, beispielsweise aus Glas, ist auf einem Innensteg ST4 eines Maßstabträgers G4 in Form eines Gehäuses, beispielsweise aus Aluminium, mittels einer Klebeschicht KS4 in Meßrichtung X geringfügig verschiebbar angeordnet. Der Maßstabträger G4 ist am ersten Ende G4a direkt mit einem ersten Befestigungselement BE4a und am zweiten Ende G4b mit einem translatorischen Freiheitsgrad in Meßrichtung X über ein Längenausgleichselement LE4 mit einem zweiten Befestigungselement BE4b verbunden ; die beiden Befestigungselemente BE4a, BE4b sind ihrerseits mittels Schrauben SR4a, SR4b starr an einem ersten Objekt O4a befestigt.

Die Teilung TM4 des Maßstabs M4 wird in bekannter Weise von einer Abtasteinheit AE4 im Gehäuse G4 abgetastet, die über einen Mitnehmer MN4 mittels Schrauben SR4c mit einem zweiten Objekt O4b verbunden ist ; der Mitnehmer MN4 greift durch einen von nicht gezeigten Dichtlippen verschlossenen Längsschlitz LS4 des Gehäuses G4 hindurch. Es können das erste Objekt O4a aus einem Schlitten, beispielsweise aus Stahl, und das zweite Objekt O4b aus dem Bett, beispielsweise aus Grauguß, einer nicht gezeigten Bearbeitungsmaschine bestehen ; die Längenmeßeinrichtung dient zur Messung der gegenseitigen Relativlage der beiden Objekte O4a, O4b bzw. der gegenseitigen Relativlage eines auf dem Schlitten O4a aufgespannten Werkstücks W4 und eines nicht gezeigten Werkzeugs am Bett O4b der Werkzeugmaschine.

Im zweiten Befestigungselement BE4b wird das Längenausgleichselement LE4 in integrierter Form durch einen mäanderförmigen Bereich mit zwei gegenläufigen Schlitzen senkrecht zur Meßrichtung X gebildet, der sich zwischen den Schrauben SR4b und dem zweiten Ende G4b des Maßstabträgers G4 in Form des Gehäuses für den Maßstab M4 und die Abtasteinheit AE4 befindet. Die beiden Befestigungselemente BE4a, BE4b bilden gleichzeitig die stirnseitigen Abschlußflächen AF4a, AF4b der beiden Enden G4a, G4b des Gehäuses G4, die mit diesen beiden Enden G4a, G4b des Gehäuses G4 in nicht gezeigter Weise fest verbunden sind.

Die inkrementale Teilung TM4 des Maßstabs M4 besteht in bekannter Weise aus einem Strichgitter mit einer Gitterkonstanten P (Teilungsperiode), die bei der Normaltemperatur T0 (20°C) exakt ist. Würde die Bearbeitung des Werkzeugs W4, beispielsweise aus Stahl, ausschließlich bei dieser Normaltemperatur T0 erfolgen, so würden trotz der unterschiedlichen Wärmeausdehnungskoeffizienten $\alpha$ (M4), $\alpha$ (W4) des Maßstabs M4 aus Glas und des Werkstücks W4 aus Stahl keine Meßungenauigkeiten während der Bearbeitung und damit keine thermisch bedingten Bearbeitungsungenauigkeiten am Werkstück W4 auftreten.

Im allgemeinen ändern sich jedoch während der Bearbeitungsdauer eines Werkstücks W4 die Temperaturen an der Werkzeugmaschine ständig gegenüber der Normaltemperatur T0, so daß bei einer Temperatu-rerhöhung $\Delta$ T gegenüber der Normaltemperatur T0 das Werkstück W4 der Länge L(W4) bei der Normaltemperatur T0 eine relative Längenänderung $\Delta$ L(W4)/L(W4) und der Maßstab M4 der gleichen Länge L(M4) bei der Normaltemperatur T0 eine relative Längenänderung $\Delta$ L(M4)/L(M4) erfahren werden. Wegen des größeren Wärmeausdehnungskoeffizienten $\alpha$ (W4) = 11 $\cdot$ $10^{-6}\,K^{-1}$ des Werkstücks W4 aus Stahl gegenüber dem Wärmeausdehungskoeffizienten $\alpha$ (M4) = 8 $\cdot$ $10^{-6}\,K^{-1}$ des Maßstabs M4 aus Glas ist auch die relative Längenänderung $\Delta$ L(W4)/L(W4) des Werkstücks W4 größer als die relative Längenänderung $\Delta$ L(M4)/L(M4) des Maßstabs M4 bei der Temperaturerhöhung $\Delta$T, so daß Meßungenauigkeiten und damit thermisch bedingte Bearbeitungsungenauigkeiten am Werkstück W4 auftreten können, die bei den heutigen Genauigkeitsanforderungen nicht mehr tragbar sind.

Der Maßstab M4, der bei der Normaltemperatur T0 die exakte Sollänge L(M4) aufweist, ist mit seinem ersten Ende M4a mittels eines ersten Klemmelements KEa an der ersten stirnseitigen Abschlußfläche AF4a des ersten Endes G4a des Gehäuses G4 befestigt. Das zweite Ende M4b des Maßstabs M4 ist in einem zweiten Klemmelement KEb befestigt, das über ein Federelement FE4 in Form einer Schraubenfeder mit dem zweiten Ende G4b des Maßstabträgers G4 verbunden ist. Es ist das erste Ende FE4a des Federelements FE4 auf einen ersten Gewindezapfen GZa des zweiten Klemmelements KEb und das zweite Ende FE4b des Federelements FE4 auf einen zweiten Gewindezapfen GZb aufgeschraubt, der auf der zweiten Abschlußfläche AF4b des zwei-ten Befestigungselements BE4b angeformt ist. Das zweite Ende FE4b des Federelements FE4 ist somit mit dem zweiten Ende G4b des Maßstabträgers G4 verbunden, das einen translatorischen Freiheitsgrad in Meßrichtung X aufweist.

Die Federkonstante C4 dieses Federelements FE4 ist so bemessen, daß der Maßstab M4 bei der Normaltemperatur T0 die exakte Sollänge L(M4) aufweist und daß bei Temperaturänderungen △ T die relative Längenänderung △ L(M4/L(M4) des Maßstabs M4 gleich der relativen Längenänderung △ L(W4)/L(W4) des Werkstücks W4 ist.

Die Erfindung ist bei lichtelektrischen, magnetischen, kapazitiven und induktiven, sowohl inkrementalen als auch absoluten Positionsmeßeinrichtungen mit Erfolg einsetzbar.

## Ansprüche

1. Bearbeitungs- oder Meßmaschine mit einer Positionmeßeinrichtung zur Messung der Relativlage eines ersten Objekts (Oa) und einer zweiten Objekts (Ob) dieser Maschine, bei der ein Werkstück (W) auf einem der Objekte (Oa) aufgespannt ist, und wobei bei der Positionsmeßeinrichtung die Teilung eines mit dem ersten Objekt (Oa) verbundenen und auf einem Maßstabträger (G) in Meßrichtung (X) geringfügig verschiebbar angeordneten Maßstabes (M) von einer mit dem zweiten Objekt (Ob) verbundenen Abtasteinheit (AE) abtastbar ist, wobei der Maßstabträger (G) an jedem der beiden Enden (Ga, Gb) an je einem starr am ersten Objekt (Oa) befestigten Befestigungselement (BEa, BEb) befestigt ist und der Maßstabträger (G) wenigstens an einem Ende (Ga, Gb) mit einem translatorischen Freiheitsgrad in Meßrichtung (X) mit dem ihm zugeordneten Befestigungselement (BEa, BEb) verbunden ist, dadurch gekennzeichnet, daß an jedem Ende des Maßstabträgers (G), das einen solchen translatorischen Freiheitsgrad aufweist, ein Federelement (FE) befestigt ist, das das zugewandte Ende (Mb) des Maßstabes (M) zur Werbindung des Maßstabs (M) mit dem Maßstabträger (G) beaufschlagt und daß die Federkonstante C dieses Federelementes (FE) so bemessen ist, daß bei Temperaturänderungen und unterschiedlichen thermischen Ausdehnungskoeffizienten des Maßstabes (M), des Maßstabträgers (G) und des Werkstückes (W) die relative Längenänderung △ L/(M)/L(M) des Maßstabes (M) gleich der relativen Längenänderung △ L(W)/L(W) des Werkstückes (W) ist.

2. Bearbeitungs- oder Meßmaschine mit einer Positionsmeßeinrichtung nach Anspruch 1, dadurch gekennzeichnet, daß der Maßstab (M4) bei einer Normaltemeratur T0 seine exakte Sollänge L(M4) aufweist.

3. Bearbeitungs- oder Meßmaschine mit einer Positionsmeßeinrichtung nach Anspruch 1, dadurch gekennzeichnet, daß der Maßstab (M1, M2, M3) eine seine exakte Sollänge L(M1), L(M2), L(M3) bei einer Normaltemperatur T0 übersteigende relative Verlängerung (V1, V2, V3) aufweist.

4. Bearbeitungs- oder Meßmaschine mit einer Positionsmeßeinrichtung nach Anspruch 1, dadurch gekennzeichnet, daß das Federelement (FE1, FE4) aus einer Schraubenfeder oder das Federelement (FE2) aus einer U-förmigen Blattfeder besteht.

5. Bearbeitungs- oder Meßmaschine mit einer Positionsmeßeinrichtung nach Anspruch 1, dadurch gekennzeichnet, daß das Federelement (FE3) aus einer Zugfeder besteht, die die beiden Enden (M3a, M3b) des Maßstabs (M3) über jeweils ein Hebelelement (HEa, HEb) beaufschlagt, die in den beiden translatorisch verschiebbaren Enden (G3a, G3b) des Maßstabträgers (G3) drehbar gelagert sind.

6. Bearbeitungs- oder Meßmaschine mit einer Positionsmeßeinrichtung nach Anspruch 5, dadurch gekennzeichnet, daß das Federelement (FE3) aus einem Metallband besteht.

7. Bearbeitungs- oder Meßmaschine mit einer Positionsmeßeinrichtung nach Anspruch 1, dadurch gekennzeichnet, daß das Federelement (FE1, FE2, FE3) von einer Einstellschraube (ES1, ES2, ES3) beaufschlagt ist.

8. Bearbeitungs- oder Meßmaschine mit einer Positionsmeßeinrichtung nach Anspruch 1, dadurch gekennzeichnet, daß der Maßstabträger (G) wenigstens an einem Ende (Ga, Gb) mit einem translatorischen Freiheitsgrad in Meßrichtung X über ein Längenausgleichselement (LE) mit dem Befestigungselement (BE) verbunden ist.

9. Bearbeitungs- oder Meßmaschine mit einer Positionsmeßeinrichtung nach Anspruch 8, dadurch gekennzeichnet, daß das Längenausgleichselement (LE) im Befestigungselement (BE) integriert ist.

## Claims

1. Machine tool or measuring machine with a position measuring device for measuring the relative position of a first object (Oa) and a second object (Ob) of this machine, in which a workpiece (W) is clamped on to one of the objects (Oa) and wherein, in the position measuring device, the graduation of a measuring scale (M) connected to the first object (Oa) and arranged slightly displaceable in the measuring direction (X) on a measuring scale carrier (G) can be sensed by a sensing unit (AE) connected to the second object (Ob), the measuring scale carrier (G) being fixed at each end (Ga, Gb) to a fixing element (BEa, BEb) fixed in each case rigidly to the first object (Oa) and the measuring scale carrier (G) being connected at at least one end to the associated fixing element (BEa, BEb) with a degree of freedom in translation in the measuring direction, characterized in that, at each end of the measuring scale carrier (G) which has such a degree of freedom in translation, there is fixed a spring element (FE) which acts on the facing end (Mb) of the measuring scale (M) for coupling the measuring scale (M) to the measuring scale carrier (G), and in that the spring constant C of this spring element (FE) is so selected that, with changes in temperature and different coefficients of thermal expansion of the measuring scale (M), of the measuring scale carrier (G) and of the workpiece (W), the relative change in length $\Delta L(M)/L(M)$ of the measuring scale (M) is equal to the relative change in length $\Delta L(W)/LW$ of the workpiece (W).

2. Machine tool or measuring machine with a position measuring device according to claim 1, characterized in that the measuring scale (M4) has its exact design length L(M4) at a normal temperature T0.

3. Machine tool or measuring machine with a position measuring device according to claim 1, characterized in that the measuring scale (M1, M2, M3) has a relative elongation (V1, V2, V3) exceeding its exact design length L(M1), L(M2), L(M3) at a normal temperature T0.

4. Machine tool or measuring machine with a position measuring device according to claim 1, characterized in that the spring element (FE1, FE4) consists of a helical spring of the spring element (FE2) consists of a U-shaped leaf spring.

5. Machine tool or measuring machine with a position measuring device according to claim 1, characterized in that the spring element (FE3) consists of a tension spring, which acts on the two ends (M3a, M3b) of the measuring scale (M3) through respective lever elements (HEa, HEb), which are pivotally mounted in the two ends (G3a, G3b) displaceable in translation of the measuring scale carrier (G3).

6. Machine tool or measuring machine with a position measuring device according to claim 5, characterized in that the spring element (FE3) consists of a metal band.

7. Machine tool or measuring machine with a position measuring device according to claim 1, characterized in that the spring element (FE1, FE2, FE3) is acted on by an adjusting screw (ES1, ES2, ES3).

8. Machine tool or measuring machine with a position measuring device according to claim 1, characterised in that the measuring scale carrier (G) is connected at at least one end to the fixing element (BE) with a degree of freedom in translation in the measuring direction X through a length compensating element (LE).

9. Machine tool or measuring machine with a position measuring device according to claim 8, characterized in that the length compensating element (LE) is integrated in the fixing element (BE).

## Revendications

1. Machine à usiner ou à mesurer munie d'un dispositif de mesure de position pour la mesure de la position relative d'un premier objet (Oa) et d'un deuxième objet (Ob) de cette machine, dans laquelle une pièce (W) est bridée sur l'un des objets (Oa), et dans laquelle la graduation d'une règle (M) reliée au premier objet (Oa) est disposée sur un support de règle (G) avec possibilité de faible déplacement dans la direction de mesure (X) et lue par une unité de lecture (AE) reliée au deuxième objet (Ob), un support de règle (G) étant fixé à chacune de ses extrémités (Ga, Gb) sur un élément de fixation (BEa, BEb) fixé rigidement sur le premier objet (Oa), le support (G) étant relié par au moins une extrémité (Ga, Gb) avec un degré de liberté en translation dans la direction de mesure (X) à l'élément de fixation (BEa, BEb) qui lui est associé, caractérisée en ce que à chaque extrémité du support de règle (G) qui présente un tel degré de liberté en translation, un élément élastique (FE) est fixé, lequel élément élastique agit sur l'extrémité (Mb) de la règle (M) pour relier la règle (M) au support (G), et en ce que la constante de rappel (C) de cet élément élastique (FE) est calculée de manière telle que pour des variations de température et pour des coefficients de dilatation thermique différents de la règle (M), du support de règle (G) et de la pièce (W), la variation de longueur relative $\Delta L(M)/L(M)$ de la règle (M) est égale à la variation de longueur relative $\Delta L(W)/L(W)$ de la pièce (W).

2. Machine à usiner ou à mesurer munie d'un dispositif de mesure de position selon la revendication 1, caractérisée en ce que la règle (M4) présente sa longueur théorique exacte L(M4) à la température normale T0.

3. Machine à usiner ou à mesurer munie d'un dispositif de mesure de position selon la revendication 1, caractérisée en ce que la règle (M1, M2, M3) présente un agrandissement relatif (V1, V2, V3) supérieur à sa longueur théorique exacte L(M1), L(M2), L(M3) à la température normale T0.

4. Machine à usiner ou à mesurer munie d'un dispositif de mesure de position selon la revendication 1, caractérisée en ce que l'élément élastique (FE1, FE4) se compose d'un ressort hélicoïdal ou que l'élément élastique (FE2) se compose d'un ressort à lame en forme de U.

5. Machine à usiner ou à mesurer munie d'un dispositif de mesure de position selon la revendication 1, caractérisée en ce que l'élément élastique (FE3) se compose d'un ressort de traction, qui agit sur les deux extrémités (M3a, M3b) de la règle (M3) par l'intermédiaire chaque fois d'un élément levier (HEa, HEb), lesdits éléments leviers étant montés pivotant dans les deux extrémités (G3a, G3b) du support de règle (G3) pouvant se déplacer en translation.

6. Machine à usiner ou à mesurer munie d'un dispositif de mesure de position selon la revendication 5, caractérisée en ce que l'élément élastique (FE3) est composé d'une bande de métal.

7. Machine à usiner ou à mesurer munie d'un dispositif de mesure de position selon la revendication 1, caractérisée en ce que l'élément élastique (FE1, FE2, FE3) est soumis à l'action d'une vis de réglage (ES1, ES2, ES3).

8. Machine à usiner ou à mesurer munie d'un dispositif de mesure de position selon la revendication 1, caractérisée en ce que le support de règle (G) est relié par au moins une extrémité (Ga, Gb) par l'intermédiaire d'un élément de compensation de longueur (LE) avec un degré de liberté en translation dans la direction de mesure (X), à l'élément de fixation (BE).

9. Machine à usiner ou à mesurer munie d'un dispositif de mesure de position selon la revendication 8, caractérisée en ce que l'élément de compensation de longueur (LE) est intégré à l'élément de fixation (BE).

Fig. 1

EP 0 294 563 B1

Fig. 2

14

Fig. 3

Fig. 4